# EUROPEAN PATENT APPLICATION

(11) **EP 4 152 481 A1**
(43) Date of publication of application: **22.03.2023**
(21) Application number: 21886669.7
(22) Date of filing: 19.10.2021
(51) Int. Cl.: H01M 10/6566, H01M 10/6556, H01M 10/63, H01M 10/627, H01M 10/647, H01M 10/613, H01M 50/20

(54) **BATTERY RACK AND ENERGY STORAGE DEVICE COMPRISING BATTERY RACK**

(30) Priority: 27.10.2020 KR 20200140705
(71) Applicant: LG Energy Solution, Ltd., Seoul 07335 (KR)
(72) Inventor: CHO, Young-Bo, Daejeon 34122 (KR); KIM, Kwang-Seob, Daejeon 34122 (KR)
(74) Representative: Hoffmann Eitle
(86) International application number: PCT/KR2021/014627
(87) International publication number: WO 2022/092675

(57) **Abstract**

An energy storage system includes: a plurality of battery racks including: a plurality of battery modules that are mutually stacked; and a laminar air flow controller provided between the plurality of battery racks or between the plurality of battery modules, and when a thermal runaway situation occurs in at least one battery module among the plurality of battery modules, configured to form a laminar air flow through a predetermined flow between the plurality of battery racks or between the plurality of battery modules.

## Description

### TECHNICAL FIELD

The present disclosure relates to a battery rack and an energy storage system including the battery pack.

The present application claims priority to Korean Patent Application No. 10-2020-0140705 filed on October 27, 2020 in the Republic of Korea, the disclosures of which are incorporated herein by reference.

### BACKGROUND ART

Secondary batteries that have high ease of application according to product groups and have electrical characteristics such as high energy density, etc. are universally applied to not only portable devices, but also electric vehicles (EVs) or hybrid vehicles (HEVs) driven by an electric drive source. These secondary batteries are attracting attention as a new energy source for improving eco-friendliness and energy efficiency in that not only the primary advantage of being able to dramatically reduce the use of fossil fuels but also the fact that no by-products are generated from the use of energy.

The types of secondary batteries that are currently widely used include a lithium ion battery, a lithium polymer battery, a nickel cadmium battery, a nickel hydrogen battery, a nickel zinc battery, etc. The operating voltage of such a unit secondary battery cell, that is, a unit battery cell, is about 2.5 V to about 4.5 V. Accordingly, when a higher output voltage is required, a plurality of battery cells are connected in series to configure a battery pack. In addition, a plurality of battery cells are connected in parallel to configure a battery pack according to the charge/discharge capacity required for the battery pack. Accordingly, the number of battery cells included in the battery pack may be set in various ways according to a required output voltage or charge/discharge capacity.

Meanwhile, when a battery pack is configured by connecting a plurality of battery cells in series/parallel, a method of configuring the battery pack by first configuring a battery module including at least one battery cell, and adding other components using the at least one battery module is common. Meanwhile, an energy storage system is configured as an energy source by providing at least one such battery rack.

The conventional energy storage system, generally, is configured to include a plurality of battery racks. Here, the plurality of battery racks are stacked with each other and are configured to include a plurality of battery modules including at least one battery cell and a rack case accommodating the plurality of battery cells.

In the case of such a conventional energy storage system, when overheating occurs in a specific battery rack among a plurality of battery racks according to an abnormal situation, heat generated from the battery module of the overheated battery rack is transferred to adjacent battery modules or a battery rack as it is, and a thermal runaway occurs, and thus there is a problem leading to a greater risk, such as explosion of the entire energy storage system.

Therefore, when overheating occurs in at least one of battery modules of the battery rack due to the occurrence of an abnormal situation, it is required to seek a solution to distribute the heat of the battery module where the abnormal situation occurs so as to prevent a thermal runaway, and prevent a direct heat transfer to the adjacent battery racks.

### DISCLOSURE

### Technical Problem

The present disclosure is designed to solve the problems of the related art, and therefore the present disclosure is directed to providing an energy storage system capable of preventing a thermal runaway when overheating occurs in at least one of battery modules of a battery rack due to the occurrence of an abnormal situation.

The present disclosure is also directed to providing an energy storage system capable of distributing heat from a battery module where an abnormal situation occurs.

The present disclosure is also directed to providing an energy storage system capable of preventing a direct heat transfer to adjacent battery racks or a battery module when overheating occurs in at least one of battery modules of a battery rack due to the occurrence of an abnormal situation.

### Technical Solution

In one aspect of the present disclosure, there is provided an energy storage system including: a plurality of battery racks including a plurality of battery modules that are mutually stacked; and a laminar air flow controller provided between the plurality of battery racks or between the plurality of battery modules, and when a thermal runaway situation occurs in at least one battery module among the plurality of battery modules, configured to form a laminar air flow through a predetermined flow between the plurality of battery racks or between the plurality of battery modules.

The laminar air flow controller may include a laminar air flow control unit electrically connected to the plurality of battery racks and configured to generate the laminar air flow through the predetermined fluid; at least one laminar air flow channel connected to the laminar air flow control unit and provided between the plurality of battery racks or between the plurality of battery modules to allow the laminar air flow to pass therethrough; and a fluid accommodation unit connected to the at least one laminar air flow channel and spaced apart from the plurality of battery racks by a predetermined distance to accommodate the predetermined fluid passing through the at least one laminar air flow channel.

The laminar air flow channel may be provided in plurality, and the plurality of laminar air flow channels may be disposed between the plurality of battery racks and are arranged long in a height direction of the plurality of battery racks.

The plurality of laminar air flow channels may be disposed on both sides of battery racks disposed at an outermost part of the plurality of battery racks.

Each of the plurality of laminar air flow channels may have a length corresponding to a length of each of the plurality of battery racks in the height direction.

The laminar air flow channel may be provided in plurality, and the plurality of laminar air flow channels may be provided between the plurality of battery modules and are disposed long in a horizontal direction of the plurality of battery racks.

The plurality of laminar air flow channels may be disposed to be spaced apart from each other by a predetermined distance in a height direction of the plurality of battery racks.

Each of the plurality of laminar air flow channels may have a length corresponding to a total length of the plurality of battery racks in the horizontal direction.

Each of the plurality of battery modules may include at least one battery cell, and the at least one battery cell is provided as a pouch type secondary battery.

The predetermined fluid may be air.

### Advantageous Effects

According to various embodiments as described above, an energy storage system capable of preventing a thermal runaway when overheating occurs in at least one of battery modules of a battery rack due to the occurrence of an abnormal situation may be provided.

In addition, according to various embodiments as described above, an energy storage system capable of distributing heat from a battery module where an abnormal situation occurs may be provided.

In addition, according to various embodiments as described above, an energy storage system capable of preventing a direct heat transfer to adjacent battery racks or a battery module when overheating occurs in at least one of battery modules of a battery rack due to the occurrence of an abnormal situation may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for explaining an energy storage system according to an embodiment of the present disclosure.
FIG. 2 is a view for explaining main portions of the energy storage system of FIG. 1.
FIGS. 3 to 5 are views for explaining a mechanism for preventing expansion of a thermal runaway when a thermal runaway situation occurs in the energy storage system of FIG. 1.
FIG. 6 is a view for explaining an energy storage system according to another embodiment of the present disclosure.
FIG. 7 is a view for explaining main parts of the energy storage system of FIG. 6.
FIGS. 8 and 9 are views for explaining a mechanism for preventing expansion of a thermal runaway when a thermal runaway situation occurs in the energy storage system of FIG. 6.
FIG. 10 is a view for explaining an energy storage system according to another embodiment of the present disclosure.
FIG. 11 is a view for explaining an energy storage system according to another embodiment of the present disclosure.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure. In addition, in order to help the understanding of the invention, the accompanying drawings are not shown in actual scale, but dimensions of some components may be exaggeratedly shown.

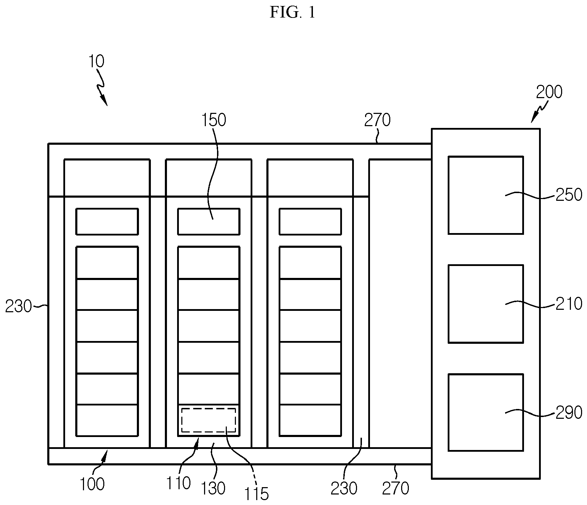

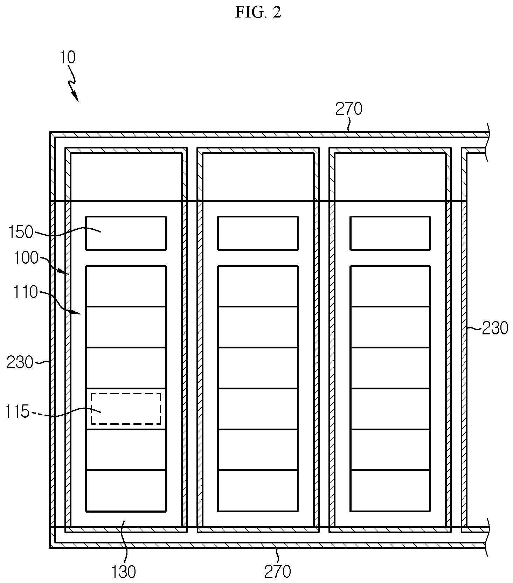

FIG. 1 is a view for explaining an energy storage system according to an embodiment of the present disclosure. FIG. 2 is a view for explaining main portions of the energy storage system of FIG. 1.

Referring to FIGS. 1 and 2, the energy storage system 10 may include, as an energy source, a battery rack 100 and a laminar air flow controller 200.

The battery rack 100 may be provided in plurality. The plurality of battery racks 100 may be mutually stacked. For example, the plurality of battery rack 100 may be mutually stacked in a horizontal direction.

Each of the plurality of battery rack 100 may include a plurality of battery modules 110, a rack case 130, and a battery management unit 150.

The plurality of battery modules 110 may be provided to be mutually stacked. For example, the plurality of battery modules 110 may be mutually stacked in a height direction of the battery rack 100.

The plurality of battery modules 110 may include at least one or more battery cells 115.

The at least one or more battery cells 115 are secondary batteries, and may be provided as pouch type secondary batteries, square type secondary batteries, or cylindrical type secondary batteries. Hereinafter, in the present embodiment, the at least one or more plurality of battery cells 115 will be described as being provided as pouch type secondary batteries.

The rack case 130 may accommodate the plurality of battery modules 110. To this end, an accommodation space capable of accommodating the plurality of battery modules 110 may be provided in the rack case 130.

The battery management unit 150 may be provided in the rack case 130 and may be electrically connected to the plurality of battery modules 110. The battery management unit 150 may control the plurality of battery modules 110. The battery management unit 150 may also be electrically connected to the laminar air flow controller 200 which will be described below.

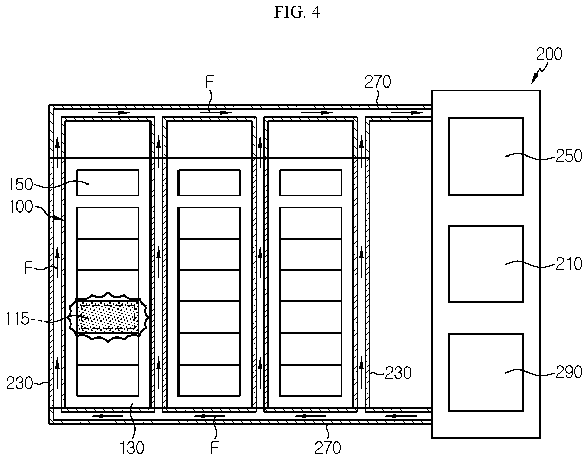

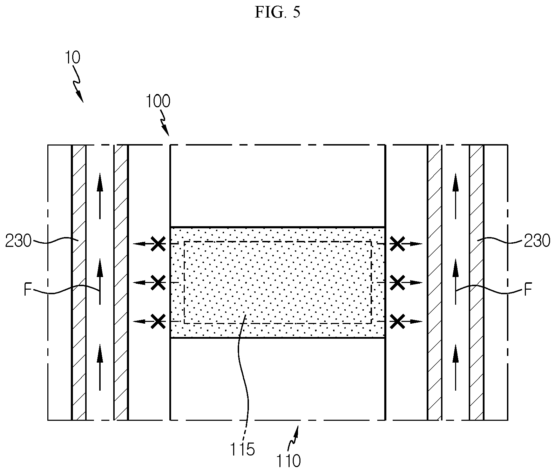

The laminar air flow controller 200 may be provided between the plurality of battery racks 100 or between the plurality of battery modules 110, and, when a thermal runaway situation occurs in at least one battery module 110 of the plurality of battery modules 110, may form a laminar air flow through a predetermined fluid F (see FIGS. 4 and 5) between the plurality of battery racks 100 or between the plurality of battery modules 110.

Here, the laminar air flow is opposite to a turbulent air flow, and is a flow in which fluids do not mix with each other. Meanwhile, in the present embodiment, a predetermined fluid forming the laminar air flow may be air.

The laminar air flow controller 200 may include a laminar air flow control unit 210, a laminar air flow channel 230, a fluid accommodation unit 250, a circulation pipe 270, and a circulation pump 290.

The laminar air flow control unit 210 may be electrically connected to the plurality of battery racks 100, and may generate the laminar air flow through the predetermined fluid F. To this end, various mechanisms or electric components for generating the laminar air flow may be provided in the laminar air flow control unit 210.

The laminar air flow channel 230 may be connected to the laminar air flow control unit 210 and provided between the plurality of battery racks 100 or the plurality of battery modules 110 to allow the laminar air flow F to pass therethrough. Hereinafter, in the present embodiment, the laminar air flow channel 230 will be described as being provided between the plurality of battery racks 100.

The laminar air flow channel 230 may be provided in plurality.

The plurality of laminar air flow channels 230 may be disposed between the plurality of battery racks 100, and may be disposed long in the height direction of the plurality of battery racks 100. In addition, the plurality of laminar air flow channels 230 may be disposed on both sides of the battery racks 100 disposed at the outermost part of the plurality of battery racks 100.

The plurality of laminar air flow channels 230 may have a length corresponding to a length of the plurality of battery racks 100 in the height direction. For example, the plurality of laminar air flow channels 230 may have the length at least the same as or greater than the length of the plurality of battery racks 100 in the height direction.

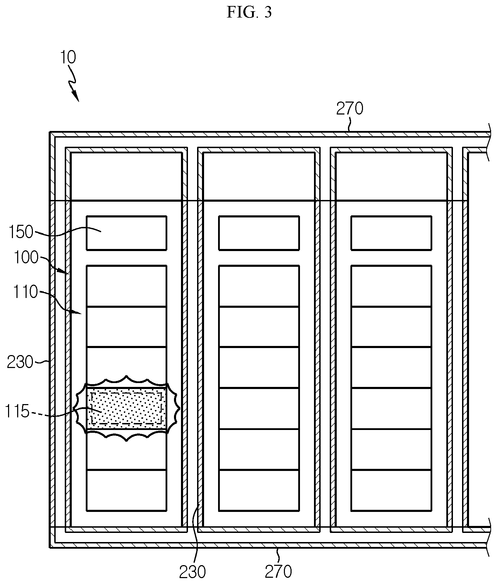

The fluid accommodation unit 250 may be connected to the at least one laminar air flow channel 230, and spaced apart from the plurality of battery racks 100 by a predetermined distance to accommodate the predetermined fluid F (see FIGS. 3 and 4) passing through the at least one laminar air flow channel 230.

The circulation pipe 270 is for circulating the predetermined fluid F (see FIGS. 4 and 5) forming the laminar air flow in the laminar air flow channel 230, and may be communicatively connected with the laminar air flow channel 230.

The circulation pump 290 may provide a driving force for circulation of the predetermined fluid F (see FIGS. 4 and 5). The circulation pump 290 may be connected to the circulation pipe.

Hereinafter, a mechanism for preventing expansion of a thermal runaway when a thermal runaway situation occurs in the energy storage system 10 according to the present embodiment will be described in more detail.

FIGS. 3 to 5 are views for explaining a mechanism for preventing expansion of a thermal runaway when a thermal runaway situation occurs in the energy storage system of FIG. 1.

Referring to FIGS. 3 to 5, overheating may occur in at least one battery rack 100 of the battery racks 100 of the energy storage system 10 according to an abnormal situation. For example, overheating may occur in the battery cell 115 of the battery module 110 of any one of the battery racks 100 according to the abnormal situation. In this case, heat of the battery module 110 including the overheated battery cell 115 runs away, and propagates to the adjacent battery rack 100, resulting in the thermal runaway, which may lead to further damage such as the explosion of the entire energy storage system 10.

In the case of the present embodiment, when such an abnormal situation occurs, the laminar air flow controller 200 connected to the battery racks 100 may detect such an abnormal situation. The laminar air flow controller 200 may control a laminar air flow to be formed toward the laminar air flow channel 230 when such an abnormal situation occurs.

The laminar air flow may be formed through flow of the predetermined fluid F, that is, air. Specifically, in the abnormal situation, the laminar air flow of the predetermined fluid F may be formed always inside the laminar air flow channels 230 disposed between the battery racks 100 through the laminar air flow controller 200.

In the case of the present embodiment, according to the laminar air flow inside the laminar air flow channels 230 between the battery racks 100, it is possible to effectively suppress or block a heat transfer to the adjacent battery racks 100.

In addition, in the present embodiment, through the laminar air flow between the laminar air flow channels 230, the temperature of the battery rack 100 of the battery module 110 in which such an abnormal situation occurs may be also effectively distributed, and thus the temperature of the overheated battery rack 100 may be also effectively reduced.

As such, in the present embodiment, through the laminar air flow controller 200, when a situation such as overheating according to an abnormal situation of at least one of the battery racks 100 occurs, the heat transfer to the adjacent battery racks 100 may be effectively blocked, thereby preventing a dangerous situation such as fire or explosion due to the thermal runaway caused by the heat transfer to the peripheral battery racks 100 in advance.

In addition, in the present embodiment, the heat transfer may be blocked through the laminar air flow through air, and thus a separate heat insulating material such as a heat shield may not be required. In the case of the separate insulating material, there is a problem that the separate insulating material may be a flammable material that rather leads to fire when such abnormal overheating occurs. In the case of the present embodiment, through the laminar air flow controller 200, it is possible to block a heat propagation to the peripheral battery racks 100 more safely without the separate insulating material having such a fire risk.

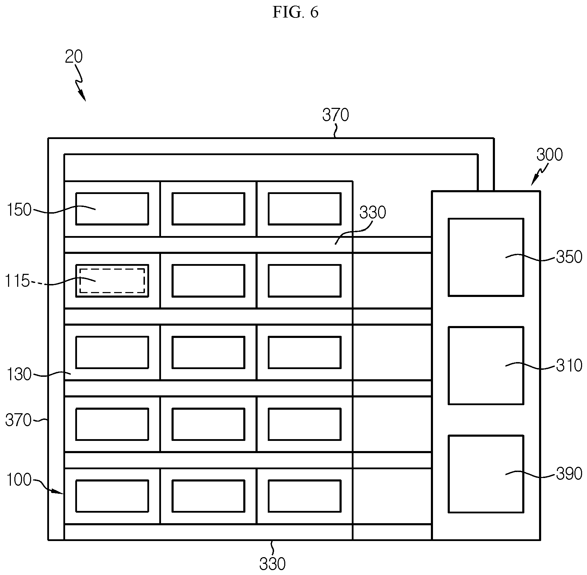

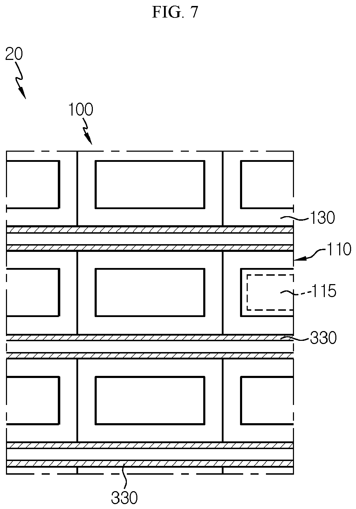

FIG. 6 is a view for explaining an energy storage system according to another embodiment of the present disclosure, and FIG. 7 is a view for explaining main parts of the energy storage system of FIG. 6.

An energy storage system 20 according to the present embodiment is similar to the energy storage system 10 of the previous embodiment, and thus redundant descriptions of components substantially the same as or similar to those of the previous embodiment will be omitted, and hereinafter, differences between the present embodiment and the previous embodiment will be mainly reviewed.

Referring to FIGS. 6 and 7, the energy storage system 20 may include the battery rack 100 and a laminar air flow controller 300.

The battery rack 100 may include the battery module 110, the rack case 130, and the battery management unit 150.

The battery module 110, the rack case 130, and the battery management unit 150 are similar to those of the previous embodiment, and thus, hereinafter, redundant descriptions thereof will be omitted.

The laminar air flow controller 300 may include a laminar air flow control unit 310, a laminar air flow channel 330, a fluid accommodation unit 350, a circulation pipe 370, and a circulation pump 390.

The laminar air flow control unit 310 is similar to the laminar air flow control unit 210 of the previous embodiment, and thus a redundant description thereof will be omitted below.

The laminar air flow channel 330 may be provided in plurality.

The plurality of laminar air flow channels 330 may be provided between the plurality of battery modules 110 of the battery racks 100, and may be disposed long in the horizontal direction of the plurality of battery racks 100.

The plurality of laminar air flow channels 330 may be disposed to be spaced apart from each other by a predetermined distance in the height direction of the plurality of battery racks 100. Each of the plurality of laminar air flow channels 330 may have a length corresponding to the total length of the plurality of battery racks 100 in the horizontal direction. For example, the plurality of laminar air flow channels 330 may have the length at least the same as or greater than the total length of the plurality of battery racks 100 in the horizontal direction.

The fluid accommodation unit 350, the circulation pipe 370, and the circulation pump 390 are respectively similar to the fluid accommodation unit 250, the circulation pipe 270, and the circulation pump 290 of the previous embodiment, and thus, hereinafter, redundant descriptions thereof will be omitted.

Hereinafter, a mechanism for preventing expansion of a thermal runaway when a thermal runaway situation occurs in the energy storage system 20 according to the present embodiment will be described in more detail below.

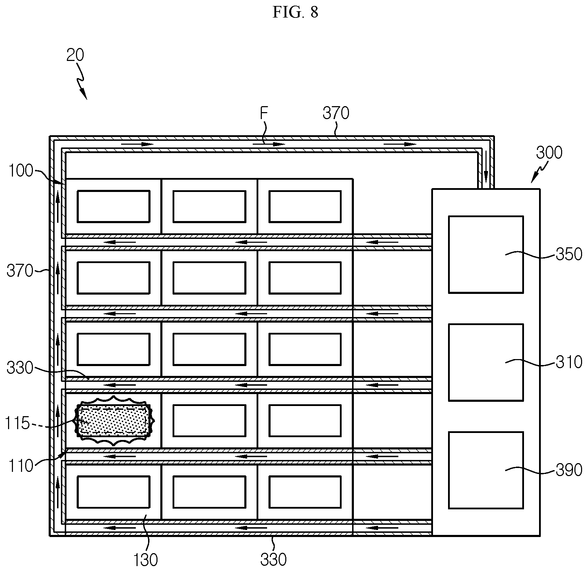

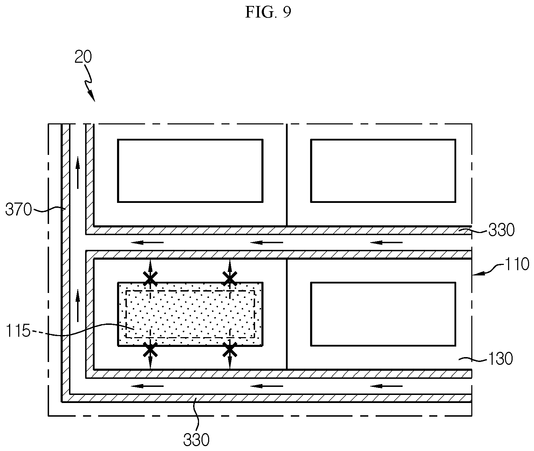

FIGS. 8 and 9 are views for explaining a mechanism for preventing expansion of a thermal runaway when a thermal runaway situation occurs in the energy storage system of FIG. 6.

Referring to FIGS. 8 and 9, overheating may occur in at least one battery rack 100 of the battery racks 100 of the energy storage system 20 according to an abnormal situation. For example, overheating may occur in the battery cell 115 of the battery module 110 of any one of the battery racks 100 according to the abnormal situation.

In the case of the present embodiment, when such an abnormal situation occurs, the laminar air flow controller 300 connected to the battery racks 100 may detect such an abnormal situation. The laminar air flow controller 300 may control a laminar air flow to be formed toward the laminar air flow channel 330 when such an abnormal situation occurs.

In the case of the present embodiment, according to the laminar air flow in the laminar air flow channels 330 between these battery racks 100, it is possible to effectively suppress or block a heat transfer to the adjacent battery module 110. Specifically, it is possible to effectively suppress or block the heat transfer to the battery module 110 adjacent to the battery cell 115 of the battery module 110 in the height direction in which the abnormal situation occurs.

Accordingly, in the present embodiment, through the laminar air flow controller 300, when the abnormal situation occurs in any one of the battery racks 100, the heat transfer to the adjacent battery module 110 in the height direction may be effectively prevented, thereby preventing a risk that may lead to the explosion of the entire battery rack 100 in advance.

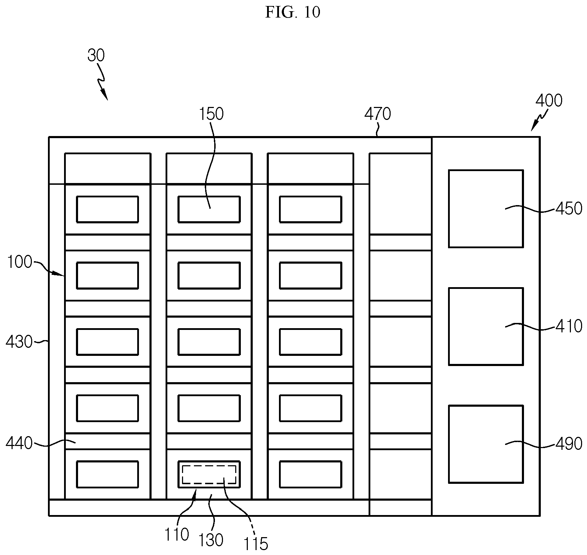

FIG. 10 is a view for explaining an energy storage system according to another embodiment of the present disclosure.

An energy storage system 30 according to the present embodiment is similar to the energy storage systems 10 and 20 of the previous embodiments, and thus, redundant descriptions of components substantially the same as or similar to those of the energy storage systems 10 and 20 of the previous embodiments will be omitted, and, hereinafter, differences between the present embodiment and the previous embodiment will be mainly described.

Referring to FIG. 10, the energy storage system 30 may include the battery rack 100 and a laminar air flow controller 400.

The battery rack 100 may include the battery module 110, the rack case 130, and the battery management unit 150.

The battery module 110, the rack case 130, and the battery management unit 150 are similar to those of the previous embodiment, and thus, hereinafter, redundant descriptions thereof will be omitted.

The laminar air flow controller 400 may include a laminar air flow control unit 410, laminar air flow channels 430 and 440, a fluid accommodation unit 450, a circulation pipe 470, and a circulation pump 490.

The laminar air flow control unit 410 is similar to the laminar air flow control unit 210 of the previous embodiment, and thus, hereinafter, a redundant description thereof will be omitted.

The laminar air flow channels 430 and 440 may include a vertical laminar air flow channel 430 and a horizontal laminar air flow channel 440.

The vertical laminar air flow channel 430 may be provided in plurality. The plurality of vertical laminar air flow channels 430 may be disposed between the plurality of battery racks 100 and on both sides of the outermost battery racks 100.

The horizontal laminar air flow channel 440 may be provided in plurality. The plurality of horizontal laminar air flow channels 440 may be provided between the battery modules 110 of the battery racks 100.

The fluid accommodation unit 450, the circulation pipe 470, and the circulation pump 490 are respectively similar to the fluid accommodation unit 250, the circulation pipe 270, and the circulation pump 290 of the previous embodiment, and thus, hereinafter, redundant descriptions thereof will be omitted.

In the energy storage system 30 according to the present embodiment, the laminar air flow channels 430 and 440 of the laminar air flow controller 400 are configured to include the vertical laminar air flow channel 430 and the horizontal laminar air flow panel 440, thereby effectively preventing the heat transfer to the peripheral battery racks 100 and the battery module 110 in both the vertical direction and the horizontal direction when the abnormal situation occurs.

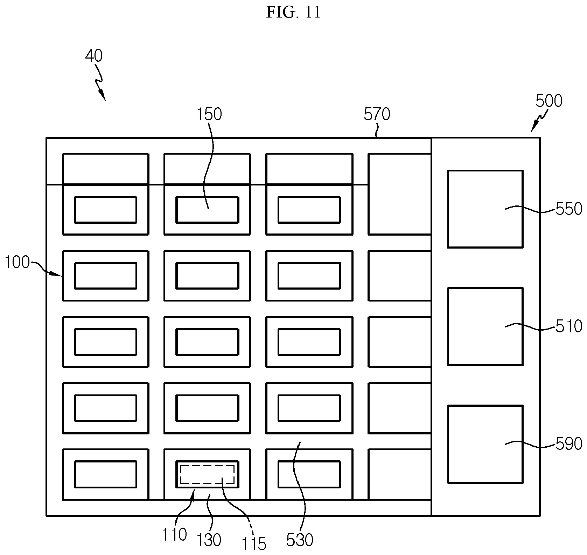

FIG. 11 is a view for explaining an energy storage system according to another embodiment of the present disclosure.

An energy storage system 40 according to the present embodiment is similar to the energy storage systems 10, 20, and 30 of the previous embodiments, and thus redundant descriptions of components substantially the same as or similar to those of the energy storage systems 10, 20, and 30 of the previous embodiments, and thus, hereinafter, differences between the present embodiment and the previous embodiments will be mainly described.

Referring to FIG. 11, the energy storage system 40 may include the battery rack 100 and a laminar air flow controller 500.

The battery rack 100 may include the battery module 110, the rack case 130, and the battery management unit 150.

The battery module 110, the rack case 130, and the battery management unit 150 are similar to those of the previous embodiment, and thus, hereinafter, redundant descriptions thereof will be omitted.

The laminar air flow controller 500 may include a laminar air flow control unit 510, a laminar air flow channel 530, a fluid accommodation unit 550, a circulation pipe 570, and a circulation pump 590.

The laminar air flow control unit 510 is similar to the laminar air flow control unit 210 of the previous embodiment, and thus, hereinafter, a redundant description thereof will be omitted.

The laminar air flow channel 530 is provided in a grid shape. The laminar air flow channel 530 may be disposed between the plurality of battery racks 100 in a horizontal direction and between the plurality of battery modules 110 in a vertical direction, that is, in a height direction.

The fluid accommodation unit 550, the circulation pipe 570, and the circulation pump 590 are respectively similar to the fluid accommodation unit 250, the circulation pipe 270, and the circulation pump 290 of the previous embodiment, and thus, hereinafter, redundant descriptions thereof will be omitted.

In the case of the present embodiment, the laminar air flow channel 530 of the laminar air flow controller 500 is in the grid shape and covers all of left and right of the battery module 110 of the battery racks 100 in the horizontal direction and upper and lower sides thereof in the vertical direction, and thus the energy storage system 40 may effectively prevent a heat transfer to the peripheral battery racks 100 and the battery module 110 in both the horizontal direction and the vertical direction when the abnormal situation occurs.

According to various embodiments as described above, when overheating occurs in at least one of the battery modules 110 of the battery rack 100 due to the abnormal situation, the energy storage systems 10, 20, 30, and 40 capable of preventing a thermal runaway may be provided.

In addition, according to various embodiments as described above, the energy storage systems 10, 20, 30, and 40 capable of distributing the heat of the battery module 110 in which the abnormal situation occurs may be provided.

In addition, according to various embodiments as described above, when overheating occurs in at least one of the battery modules 110 of the battery rack 100 according to the abnormal situation, the energy storage systems 10, 20, 30, and 40 capable of preventing a direct heat transfer to the adjacent battery racks 100 or the battery module 110 may be provided.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. An energy storage system comprising:
a plurality of battery racks comprising a plurality of battery modules that are mutually stacked; and
a laminar air flow controller provided between the plurality of battery racks or between the plurality of battery modules, and when a thermal runaway situation occurs in at least one battery module among the plurality of battery modules, configured to form a laminar air flow through a predetermined fluid between the plurality of battery racks or between the plurality of battery modules.

2. The energy storage system of claim 1,
wherein the laminar air flow controller comprises:
a laminar air flow control unit electrically connected to the plurality of battery racks and configured to generate the laminar air flow through the predetermined fluid;
at least one laminar air flow channel connected to the laminar air flow control unit and provided between the plurality of battery racks or between the plurality of battery modules to allow the laminar air flow to pass therethrough; and
a fluid accommodation unit connected to the at least one laminar air flow channel and spaced apart from the plurality of battery racks by a predetermined distance to accommodate the predetermined fluid passing through the at least one laminar air flow channel.

3. The energy storage system of claim 2,
wherein the laminar air flow channel is provided in plurality, and
wherein the plurality of laminar air flow channels are disposed between the plurality of battery racks and are arranged long in a height direction of the plurality of battery racks.

4. The energy storage system of claim 3,
wherein the plurality of laminar air flow channels are disposed on both sides of battery racks disposed at an outermost part of the plurality of battery racks.

5. The energy storage system of claim 3,
wherein each of the plurality of laminar air flow channels has a length corresponding to a length of each of the plurality of battery racks in the height direction.

6. The energy storage system of claim 2,
wherein the laminar air flow channel is provided in plurality, and
wherein the plurality of laminar air flow channels are provided between the plurality of battery modules and are disposed long in a horizontal direction of the plurality of battery racks.

7. The energy storage system of claim 6,
wherein the plurality of laminar air flow channels are disposed to be spaced apart from each other by a predetermined distance in a height direction of the plurality of battery racks.

8. The energy storage system of claim 6,
wherein each of the plurality of laminar air flow channels has a length corresponding to a total length of the plurality of battery racks in the horizontal direction.

9. The energy storage system of claim 1,
wherein each of the plurality of battery modules comprises at least one battery cell, and
wherein the at least one battery cell is provided as a pouch type secondary battery.

10. The energy storage system of claim 1, wherein the predetermined fluid is air.
